Europäisches Patentamt

European Patent Office

Office européen des brevets

(19)

(11) Publication number: **0 140 844**
A2

## (12) EUROPEAN PATENT APPLICATION

(21) Application number: 84830270.9

(22) Date of filing: 11.10.84

(51) Int. Cl.⁴: **G 01 F 23/24**

(30) Priority: 14.10.83 IT 5382383 U

(43) Date of publication of application: 08.05.85
Bulletin 85/19

(84) Designated Contracting States: BE DE FR GB LU NL

(71) Applicant: FOREDIT S.p.A., Via Viazza 5,
I-10021 Cambiano Torino (IT)

(72) Inventor: Ariolfo, Alberto, c/o.FOREDIT S.p.A. Via
Viazza 5, I-10021 Cambiano (Torino) (IT)

(74) Representative: Bosotti, Luciano et al, c/o
Jacobacci-Casetta & Perani S.p.A. Via Alfieri, 17,
I-10121 Torino (IT)

(54) Level measuring device for liquids, particularly for controlling lubricant level in internal combustion engines.

(57) A detector probe (4) is at least partially immersed in the liquid of which it is desired to detect the level, and carries an associated electrical heating element (5), a pair of thermo-electric sensors (6, 7), one of which (6) detects the temperature level reached by the heating element (5) when the latter is energised. The two sensors (6, 7) are connected in an electrical measuring circuit (11 to 16) which, in dependence on the difference between the temperature levels detected by the two sensors (6, 7), permits the identification and signalling (16) of the occurrence of a situation in which the dissipation by the liquid of the heat generated by the heating element (5) is reduced as a result of the lowering of the level of the liquid.

Level measuring Device for Liquids, particularly for
controlling  lubricant level in internal combustion
engines

The present invention refers to level-gauging
devices for liquids and relates in particular to
a device capable of indicating the lowering in
the level of a liquid below a predetermined
threshold level.

The device according to the invention is characterised
in that it comprises:
-     a detector probe carrying an associated
electrical heating element which can be selectively
energised; said probe being capable , in use,
of being introduced into the aforesaid liquid in
an arrangement in which the heat generated by the
heating element upon energisation thereof, becomes
dissipated within the liquid to an extent
differentiated according to whether the level of
this liquid is, respectively, either above or
below the aforesaid threshold level;
-     a first thermoelectric sensor and a second
thermoelectric sensor for detecting the temperature
of the liquid  mounted  upon   the said probe
in an arrangement whereby the said first sensor
is capable of detecting the temperature reached by the
heating element upon energisation thereof, and
-     an electrical control and processing circuit
comprising a supply unit for the energisation
of the said electrical heating element,a comparator
unit supplied with the signals produced by the
said first and the said second thermoelectric
sensors and capable of generating a signal indicative of the difference between the temperature detected by said first sensor and the temperature detected by said second sensor, of comparing the said difference signal with a predetermined reference signal and of producing an alarm signal when said difference signal reaches the level of the said reference signal and a timing unit for controlling the sequential operation of the supply unit and of the comparator unit.

The device according to the invention is based on the principle, already known and used in the prior art of gauging liquid levels, of indicating the temperature reached by an electrical heating element at least partially immersed in the liquid of which it is intended to gauge the level. The heat generated by the heating element is in fact dissipated within the liquid to a relative extent which is dependent upon how much or how little the heating element is immersed in the liquid. Since the temperature reached by the heating element is uniquely determined, other parameters remaining unchanged, by the quantity of heat that is dissipated within the liquid, the indication of the temperature reached by the heating element makes it possible to derive therefrom an indication of the true level of the liquid. In particular the partial or total emergence of the heating element from the liquid, owing to a lowering in the level thereof, produces a drastic reduction in the dissipatory phenomena. The rise in temperature which can occur within the heating element upon energisation thereof is, under such conditions, more marked. The indication of such a greater increase in temperature therefore serves to produce an indication of the lowering in the liquid level.

The device according to the invention permits the gauging of the level of a liquid according to the principle described in a way which is particularly advantageous in terms of efficiency and ease of use.

Significant efficiency of use, particularly in the application to the indication of lubricant levels in internal combustion engines, derives from the use of two thermoelectric sensor elements sensitive to the temperature of the liquid of which it is wished to gauge the level, one of which is arranged in close proximity to the heating element, thus being placed in a position to indicate the temperature reached by the heating element upon the energisation thereof. In the electrical control and processing circuit, the signals produced by two thermoelectric sensors are compared with each other, thus furnishing a differential reading of the temperature increase in the heater. In this way the indication of the lowering in the liquid level is not in any way affected by the temperature of this liquid. The gauging device is thus prevented from accidentially producing "false alarms" when the liquid remains at a sufficient level, or else from omitting to signal any lowering that may have oocurred in the liquid level below the threshold level. According to an embodiment considered to be preferential for the application to lubricant level gauging in internal combustion engines, the device comprises a housing for the electrical control and processing circuit, mountable on an external wall of the engine; with this housing there is associated a rod which supports, at the end thereof opposite the housing, the detector probe. In the position of use of the device, the rod extends into the lubricant sump of the engine, maintaining the probe in a position of immersion in the lubricant.

The device according to the invention may thus be realised, particularly conveniently, in a configuration which substantially reproduces the configuration of the "dip sticks" currently used for gauging oil levels in internal combustion engines.

Further characteristics and advantages of the invention will appear from the description which follows, given purely by way of non-limiting example and with reference to the appended drawings, wherein:

- Figure 1 is a partially cut-away lateral view of a device according to the invention
in its disposition of use;

- Figure 2 is a section on a larger scale
along the line II-II in Figure 1;

- Figure 3 illustrates in block-schematic
form the circuit arrangement of the gauging
device according to the invention, and

- Figure 4 is a diagram which
illustrates schematically the operating sequence
of the device according to the invention.

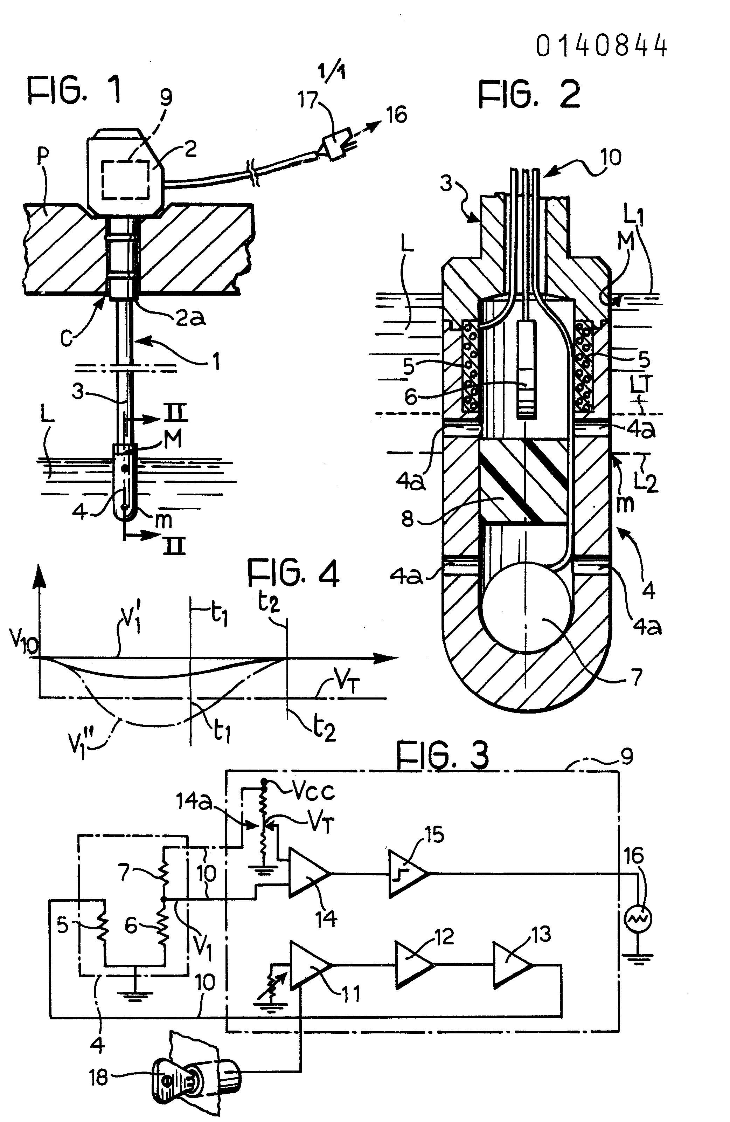

In Figure 1 there is generally indicated with
the reference numeral 1, a lubricant-level
gauging device as applied to an internal
combustion engine (not shown).

A portion of the side wall of the engine
housing, schematically indicated B, is provided
with an aperture C.

Reference L indicates schematically the lubricant
liquid (oil) which is collected in a sump
provided within the engine housing.

By way of reference, the aperture C may consist
of the aperture normally provided in the housing
of internal combustion engines for the insertion
of the aforementioned "dip stick" for gauging
the lubricant oil level.

The device 1 comprises essentially a shaped body 2 (casing) provided with a cylindrical part 2a which may be introduced into the aperture C.

From the body 2 there extends a tubular rod 3 which supports, at its end opposite the body 2, a detector probe 4.

In use of the device, the probe 4 is substantially immersed in the lubricant L.

The device 1 may therefore be fitted to an internal combustion engine so as to replace the dip stick normally provided for indicating the oil level.

Naturally other assembly arrangements are possible, particularly when the device 1 forms a part of the standard equipment of the engine.

The structure of the probe 4 is illustrated in greater detail in Figure 1.

The probe 4 consists of a hollow cylindrical casing in which is fitted, adjacent the upper end of this casing, an annular electrical heating element 5. The electrical heating element 5 may be made in various forms, for example, in the form of a heat-resistant body incorporating a metal heating filament, or else in the form of a heating resistor.

The assembly arrangement of the electrical heating element 5 is such that, when the lubricant level L in the engine is satisfactory (for example when the free surface of the lubricant reaches a level $L_1$ corresponding to the maximum level indicated by a mark M provided in the external surface of the probe 4) the heating element is completely immersed beneath the level of the lubricant. When, on the other hand, the lubricant level L is insufficient (for example, when the free surface of the lubricant reaches the level $L_2$ corresponding to the minimum level indicated by a mark m on the external surface of the probe 4) the whole of the heating element 5 is above the level of the lubricant.

In the application illustrated, a reference threshold level, schematically indicated by a dotted line $L_T$, has been selected at an intermediate position between the maximum level $L_1$ and the minimum level $L_2$, adjacent the latter. Within the detector probe 4 there is fitted a first thermoelectric sensor 6, typically consisting of a NTC or PTC resistor.

The sensor 6 is at the same height as that of the heating element 5 and is effectively surrounded thereby. The resistance of the sensor 6 therefore varies as a function of the temperature of the heating element 5.

A further thermoelectric sensor 7, substantially similar to the sensor 6, is positioned in the bottom part of the detector probe 4.

The casing 4 of the probe may be made of heat-resistant metal or plastics material and is provided with holes 4a which permit the lubricant to penetrate this casing and so flow over the heating element 5, and the thermoelectric sensors 6 and 7.

Between the sensor 7 and the sensor 6 the detector probe 4 has fitted therein a thermally insulating body 8, designed to impede the propagation of heat from the heating element 5 towards the sensor 7.

Figure 3 illustrates schematically the connection of the heating element 5 and of the sensors 6 and 7 in an electrical control and processing circuit 9 mounted within the body 2 in Figure 1.

The elements of the probe 4 and the circuit 9 are connected by means of a group of electrical conductors, generally indicated 10, which extend within the axial cavity of the rod 3.

The control and processing circuit 9 includes a timing unit, indicated 11, which, through a buffer stage 12, controls the operation of a power unit 13 which supplies the heating element 5.

The sensors 6 and 7 are interconnected in series so as to form a voltage divider interposed between a power supply source $V_{cc}$ and the earth of the circuit. The voltage $V_1$ present at the tapping point of the divider (the connection point between the sensors 6 and 7) is applied to one of the inputs of a comparator device 14 which compares the voltage $V_1$ with a reference voltage $V_T$ derived from the voltage $V_{cc}$ across a voltage divider 14a, normally adjustable so as to permit the calibration of the device. The comparator 14 generates an output logic signal $V_2$, which assumes two distinct levels according to the result of the comparison between $V_1$ and $V_T$. An output unit 15 controls the transmission of the output signal of the comparator 14 to an indicator light 16 normally positioned on the instrument panel of the vehicle fitted with the engine with which the gauging device 1 is associated.

Figure 1 shows a releasable connector 17 by means of which a connection can be established between the device 1 (normally removable from the engine) and the indicator light 16.

Finally the reference numeral 18 indicates schematically the ignition switch of the motor vehicle which activates the timing unit every time the engine is started.

In particular, when the engine is started, the timing unit 11 controls for a time interval $t_1$ (Figure 4) the operation of the units 12 and 13 which provide the power supply for the heating element 5, thus simultaneously maintaining the output unit 15 in a state of deactivation (output $V_2$ at zero).

At the instant $t_1$, the timing unit 11 de-energises the heating element 5, producing the simultaneous activation of the output unit 15.

Figure 4 illustrates graphically two possible ways in which the output voltage $V_1$ of the comparator 14 can change with time.

In particular, as identified $V'_1$, there is illustrated a typical output voltage detectable when the lubricant level is above the threshold level $L_T$. The chain-dotted line identified $V''_1$ illustrates, on the other hand, a typical graph of changes in the voltage $V_1$ detectable when the lubricant level has dropped below the threshold level $L_T$.

In order to understand the operation of the device it is sufficient to observe that, in stationary conditions, prior to starting up (either when starting an engine from cold, or when hot) the two thermoelectric sensors 6 and 7 (NTC or PTC) are substantially at the same temperature, that is to say at the temperature of the lubricant L.

When the heating element 5 is energised, the temperature of this element increases, thus causing a corresponding variation in the electrical resistance of the thermoelectric sensor 6.

This variation of resistance produces a corresponding variation of the signal $V_1$ which, prior to the energisation of the heating element 5, is at a fixed reference level $V_{10}$.

The variation of the signal level $V_1$ may be arranged to be either in the form of a positive variation, or in the form of a negative variation, according to whether the sensors 6, 7 are of the NTC type or the PTC type and in accordance with the connections thereof to the comparator 14.

The actual increase in temperature of the heating element 5 and, consequently, the amplitude of the variation in the signal $V_1$, assumes widely different values according to whether the lubricant level stands either above or below the heating element 5.

In the first case, which generally corresponds to the condition in which the lubricant level is above the threshold level $L_T$, the temperature increase in the heating element 5 is less detectable, since a substantial part of the heat which is generated in the heating element 5 is dissipated within the lubricant L.

In the case in which the level drops below the threshold level $L_T$, the lubricant L is no longer able to absorb part of the heat generated by the heating element 5. The temperature increase produced in the heating element 5 is, under such conditions, much more readily detectable.

The various temperature levels reached by the heating element 5 can easily be detected by observing the changes in the signal $V_1$.

At the instant $t_1$, the timing unit 11 deactivates the heating element 5, simultaneously enabling the output unit 15 until the instant $t_2$.

Through this output unit 15 the signal $V_2$ indicative of the result of the comparison between $V_1$ and $V_T$ ( the signal generated by the comparator 14) is applied to the indicator light 16.

With reference to the example illustrated, while the signal $V_1$ ($V'_1$) remains above the threshold level $V_T$, the output $V_2$ of the comparator circuit 14 remains at a zero level, and the indicator light 16 is not lit. These conditions, in fact, correspond to a lubricant level that is sufficient, being higher than the threshold level $L_T$.

When the signal $V_1$ ($V''_1$) drops below the threshold level $V_T$, the output $V_2$ of the comparator 14 changes to a "high" logic level thus activating the indicator light 16.

The driver of the motor vehicle is thus warned of the fact that the lubricant level is insufficient.

The indication of the lubricant level furnished by the device according to the invention is based upon a differential measure of the temperature reached by the heating element 5 and is not, therefore, in any way affected by the temperature of the lubricant.

It will moreover be observed that the timing unit 11 controls the energisation of the heating element 5 and the activation of the output unit 15 in two distinct timing intervals. This solution  prevents the operation of detecting and comparing the signals produced by the sensors 6, 7 from being affected the the process of heating the element 5.

0140844

CLAIMS

1.   A device for gauging the level of a
liquid capable of detecting the lowering of this
level below a predetermined threshold level,
charaterised in that it comprises:
-      a detector probe (4) carrying an associated
electrical heating element (5) which can be
selectively energised; said probe (4) being
capable in use, of being introduced into the
aforesaid liquid (L) in an arrangement in which
the heat generated by the heating element (5)
upon energisation thereof, becomes dissipated
within the liquid (L) to an extent differentiated
according to whether the level of this liquid (L)
is, respectively, either above or below the
aforesaid threshold level ($L_T$);
-      a first thermoelectric sensor (6) and a
second thermoelectric sensor (7) for detecting
the temperature of the liquid (L) mounted upon
the said probe (4) in an arrangement whereby
the said first sensor (6) is capable of detecting
the temperature reached by the heating element (5)
upon energisation thereof, and
-      an electrical control and processing circuit (9),
comprising a supply unit (12, 13) for the
energisation of the said electrical heating element (5),
a comparator unit (14, 15) supplied with the
signals produced by the said first (6) and the said
second (7) thermoelectric sensors and capable
of generating a signal ($V_1$) indicative of the
difference between the temperature detected by
said first sensor (6) and the temperature detected
said second sensor (7), of comparing the said

difference signal $(V_1)$ with a predetermined
reference signal $(V_T)$ and of producing
an alarm signal $(V_2)$ when said difference
signal $(V_1)$ reaches the level of the said
reference signal $(V_T)$ and a timing unit (11)
for controlling the sequential operation
of said supply unit (12, 13) and of said
comparator unit (14, 15).

2.   A device according to Claim 1, characterised
in that said timing unit (11) activates
the power supply unit (12, 13) and the
comparator unit (14, 15) in separate timing
intervals.

3.   A device according to Claim 1 or Claim 2,
characterised in that said thermoelectric
sensors (6, 7) comprise resistors of the NTC
or PTC type.

4.   A device according to Claim 3, characterised
in that said sensors (6, 7) jointly form a
voltage divider.

5.   A device according to any one of
Claims 1 to 4, characterised in that between
said electrical heating element (5) and said
second thermoelectric sensor (7) there is
interposed a thermally insulating body (8).

6.   A device according to any one of the
preceding claims, particularly for gauging the lubricant level in internal combustion engines, characterised in that it comprises a casing (2) for said electrical control and processing circuit (9), which can be fitted to the outside of the said engine, a rod (3) extending from said casing (2) and supporting at the end thereof opposite the casing (2) the detector probe (4); the arrangement being such that, during use of the device, the said rod (3) extends into the lubricant sump of said engine, maintaining the detector probe (4) in a position of immersion in the lubricant (L).

0140844

1/1

FIG. 1

FIG. 2

FIG. 4

FIG. 3